(19) Europäisches Patentamt / European Patent Office / Office européen des brevets

(11) **EP 2 895 531 B1**

(12) **EUROPEAN PATENT SPECIFICATION**

(45) Date of publication and mention
of the grant of the patent:
**02.11.2016 Bulletin 2016/44**

(21) Application number: **13716885.2**

(22) Date of filing: **14.03.2013**

(51) Int Cl.:
**C08J 3/09** *(2006.01)*

(86) International application number:
**PCT/US2013/031496**

(87) International publication number:
**WO 2014/042683 (20.03.2014 Gazette 2014/12)**

(54) **COMPOSITION CONTAINING A LOW VISCOSITY ETHYLENE/ALPHA-OLEFIN COPOLYMER OR A LOW VISCOSITY FUNCTIONALIZED ETHYLENE/ALPHA-OLEFIN COPOLYMER**

ZUSAMMENSETZUNG MIT EINEM ETHYLEN-/ALPHA-OLEFINCOPOLYMER NIEDRIGER VISKOSITÄT ODER EINEM FUNKTIONALISIERTEN ETHYLEN-/ALPHA-OLEFINCOPOLYMER MIT NIEDRIGER VISKOSITÄT

COMPOSITION CONTENANT UN COPOLYMÈRE ÉTHYLÈNE/ALPHA-OLÉFINE À FAIBLE VISCOSITÉ OU UN COPOLYMÈRE ÉTHYLÈNE/ALPHA-OLÉFINE FONCTIONNALISÉ À FAIBLE VISCOSITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2012 PCT/CN2012/081401**

(43) Date of publication of application:
**22.07.2015 Bulletin 2015/30**

(73) Proprietor: **Dow Global Technologies LLC**
**Midland, MI 48674 (US)**

(72) Inventors:
• **YU, Brian, Hai Yang**
**Shanghai 201300 (CN)**
• **DONATE, Felipe, A.**
**Midland, MI 48642-6806 (US)**
• **YALVAC, Selim**
**Pearland, TX 77584 (US)**
• **WEAVER, Laura, B.**
**Lake Jackson, TX 77566 (US)**
• **REGO, Jose, M.**
**Houston, TX 77025 (US)**

(74) Representative: **Boult Wade Tennant**
**Verulam Gardens**
**70 Gray's Inn Road**
**London WC1X 8BT (GB)**

(56) References cited:
**WO-A1-2007/078697**

• **DOW: "Effective collaboration results inimproved hot melt adhesivesfor hard-to-bond substrates", , July 2012 (2012-07), XP002699644, Retrieved from the Internet: URL:http://msdssearch.dow.com/PublishedLit eratureDOWCOM/dh_08b4/0901b803808b499e.p df ?filepath=elastomers/pdfs/noreg/258-13601. pdf&fromPage=GetDoc [retrieved on 2013-06-27]**
• **DOW: "IMPROVE PACKAGING WITHSTRONGER ADHESIONFOR HARD-TO-BOND SUBSTRATES", , August 2012 (2012-08), XP002699645, Retrieved from the Internet: URL:http://msdssearch.dow.com/PublishedLit eratureDOWCOM/dh_08b3/0901b803808b3e52.p df ?filepath=elastomers/pdfs/noreg/258-13701. pdf&fromPage=GetDoc [retrieved on 2013-06-27]**
• **DOW: "INNOVATIVE SOLUTION HELPSBUILD STRONGER BONDSFOR hard-to -bond substrates", , August 2012 (2012-08), XP002699646, Retrieved from the Internet: URL:http://msdssearch.dow.com/PublishedLit eratureDOWCOM/dh_08b3/0901b803808b3e55.p df ?filepath=elastomers/pdfs/noreg/258-13801. pdf&fromPage=GetDoc [retrieved on 2013-06-27]**

**Description**

REFERENCE TO RELATED APPLICATIONS

The present application claims priority to International Application No. PCT/CN12/081401, filed September 14, 2012.

FIELD

The present disclosure is directed to compositions containing a low viscosity ethylene/$\alpha$-olefin copolymer or a low viscosity functionalized ethylene/$\alpha$-olefin copolymer, and a solvent.

BACKGROUND

Olefin-based polymers have been widely used in many applications because of their low cost and ease in polymer property design. Such polymers are finding many relatively new applications, for example, as shoe soles in the footwear industry. Currently the materials used in footwear midsole are dominated by ethylene vinyl acetate copolymers (EVA). Compared with EVA, olefin-based polymers have several advantages, such as imparting less weight to the final article, which is a general trend in sole designs for footwear products.

However, olefin-based polymers are typically non-polar in nature, making them difficult to be bonded, painted, and printed, due to a low surface energy. For example, in the footwear assembling process, the midsole is typically bonded with both the outsole (usually made of vulcanized rubber or thermoplastic polyurethane) and the shoe upper (usually made from natural/artificial leather). Similar bonding is used in other applications, such as toys and sporting goods.

To enhance the surface energy and thus improve the bondability and paintability of olefin-based polymers, techniques such as flame treatment, plasma treatment, and acid treatment have been used. These techniques, however, are complicated, costly, and hazardous to workers. A need exists for a composition that is safe, effective and easy to apply for improving the bondability and paintability of olefin-based polymers.

SUMMARY

In the first aspect of the present invention, there is provided the composition of claim 1. The present disclosure is directed to compositions suitable as primers for application to substrates formed from olefin-based polymers.

The present composition includes a low viscosity ethylene/$\alpha$-olefin copolymer or a low viscosity functionalized ethylene/$\alpha$-olefin copolymer. Each polymer has a melt viscosity less than or equal to 20.0 Pa•s (177°C). The composition also includes a non-aromatic and halogen-free solvent. The solvent has a boiling point from 100 °C to 170 °C. The composition has a Relative Energy Difference (RED) less than or equal to 1.05 $(J/cc)^{1/2}$, based on the Hansen solubility parameter.

In an embodiment, the low viscosity ethylene/$\alpha$-olefin copolymer or the low viscosity functionalized ethylene/$\alpha$-olefin copolymer, each has the following properties: a) an Mw/Mn from 1.5 to 5.0, and b) a density from 0.855 to 0.900 g/cc.

In an embodiment, the solvent is selected from a hydrocarbon, an ether, a ketone, an ester, and combinations thereof.

BRIEF DESCRIPTION OF THE DRAWINGS

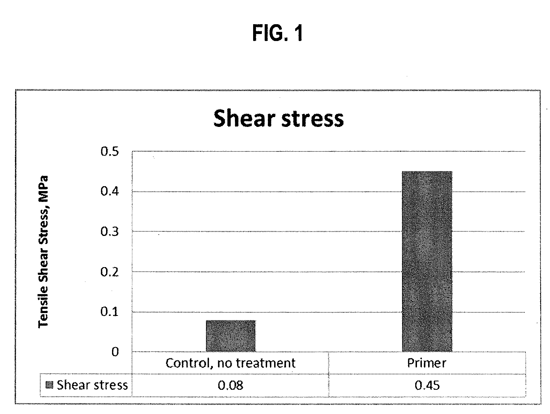

Figure 1 is a graph depicting the tensile shear stress of a primer composition in accordance with an embodiment of the present disclosure.

DETAILED DESCRIPTION

The present disclosure provides a composition. The composition includes a low viscosity ethylene/$\alpha$-olefin copolymer or a low viscosity functionalized ethylene/$\alpha$-olefin copolymer and a solvent. Each copolymer has a melt viscosity less than or equal to 20.0 Pa-s (177°C). The solvent is a non-aromatic and halogen-free solvent. The solvent has a boiling point from 100°C to 170°C. The composition has a Relative Energy Difference (RED) less than or equal to 1.05 $(J/cc)^{1/2}$, based on the Hansen solubility parameter. The present composition may comprise a combination of two or more embodiments as described herein.

*1. Low viscosity ethylene/α-olefin copolymer*

In an embodiment, the composition includes a low viscosity ethylene/α-olefin copolymer. A "low viscosity ethylene/α-olefin copolymer," as used herein, is an ethylene-based polymer, with a $C_3$-$C_{10}$ α-olefin comonomer, the ethylene/α-olefin copolymer having a melt viscosity from 1.0 Pascal-second (Pa-s) to less than 20.0 Pa-s, or 15.0 Pa-s, or 10.0 Pa-s, or 8.0 Pa-s. Melt viscosity is measured using a Brookfield rotational viscometer in accordance with ASTM D 1084 (at 177°C, 350°F). Nonlimiting examples of suitable $C_3$-$C_{10}$ α-olefin comonomer include propylene, 1-butene, 1-pentene, 1-hexene, 1-heptene and 1-octene.

The low viscosity ethylene/α-olefin copolymer can have a melt viscosity from 1.0 Pa-s, or 2.0 Pa-s, or 3.0 Pa-s, or 4.0 Pa-s, or 5.0 Pa-s, or 6.0 Pa-s, to less than 20.0 Pa-s, or 15.0 Pa-s, or 10.0 Pa-s, or 8.0 Pa-s.

In an embodiment, the low viscosity ethylene/α-olefin copolymer has an Mw/Mn from 1.5 to 5.0 and a density from 0.85 g/cc to 0.90 g/cc.

In an embodiment, the low viscosity ethylene/α-olefin copolymer has a melt viscosity from 1.0 Pa-s to less than 10.0 Pa-s.

In an embodiment the low viscosity ethylene/α-olefin copolymer has one, some, or all of the following properties: a melt viscosity from 1.0 Pa-s to less than 10.0 Pa-s, a density from 0.86 g/cc to 0.88 g/cc, and a weight average molecular weight (Mw) less than 25,000, an Mw/Mn from 1.5 to 2.5, a melting temperature (Tm) from 68-70°C (DSC), a melt index (I2) greater than 500 g/10 minute, and a crystallinity less than 25%, or from 5% to less than 25% (as determined by DSC).

In an embodiment, the low viscosity ethylene/α-olefin copolymer is a homogeneously branched substantially linear ethylene/α-olefin copolymer. A "homogeneously-branched ethylene/α-olefin copolymer," as used herein, is an ethylene/α-olefin interpolymer, in which the α-olefin comonomer is randomly distributed within a given polymer molecule, and all of the polymer molecules have the same or substantially the same comonomer-to-ethylene ratio.

Homogeneously branched substantially linear ethylene/α-olefin interpolymer is described in U.S. Patent Nos. 5,272,236; 5,278,272; 6,054,544; 6,335,410 and 6,723,810. Substantially linear ethylene/α-olefin interpolymer has long chain branching. The long chain branches have the same comonomer distribution as the polymer backbone, and can have about the same length as the length of the polymer backbone. The term "substantially linear," typically, is in reference to a polymer that is substituted, on average, with "0.01 long chain branches per 1000 carbons" to "3 long chain branches per 1000 carbons." The length of a long chain branch is longer than the carbon length of a short chain branch, formed from the incorporation of one comonomer into the polymer backbone.

Some polymers may be substituted with 0.01 long chain branches per 1000 total carbons to 3 long chain branches per 1000 total carbons, further from 0.01 long chain branches per 1000 total carbons to 2 long chain branches per 1000 total carbons, and further from 0.01 long chain branches per 1000 total carbons to 1 long chain branch per 1000 total carbons.

The substantially linear homogeneously branched linear ethylene/α-olefin interpolymers form a unique class of ethylene polymers. They differ substantially from the conventional, homogeneously branched linear ethylene/α-olefin interpolymers, as discussed above, and, moreover, they are not in the same class as conventional heterogeneous "Ziegler-Natta catalyst polymerized" linear ethylene polymers (for example, ultra-low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymer.

Nonlimiting examples of suitable low viscosity ethylene/α-olefin copolymer include AFFINITY™ GA Polyolefin Elastomers, available from The Dow Chemical Company, Midland, Michigan, USA.

The low viscosity ethylene/α-olefin copolymer may comprise a combination of two or more embodiments as described herein.

*2. Low viscosity functionalized ethylene/α-olefin copolymer*

In an embodiment, the composition includes a low viscosity functionalized ethylene/α-olefin copolymer. A "low viscosity functionalized ethylene/α-olefin copolymer," as used herein, is the previously described low viscosity ethylene/α-olefin copolymer that has been modified to introduce an element other than carbon and hydrogen. The functional group can be selected from primary or secondary amines, alcohols, thiols, aldehydes, carboxylic acids and derivatives thereof (anhydrides), acrylates, acrylic acids, silanes, and sulfonic acids.

In an embodiment, the low viscosity functionalized ethylene/α-olefin copolymer can have a melt viscosity from 1.0 Pa-s, or 2.0 Pa-s, or 3.0 Pa-s, or 4.0 Pa-s, or 5.0 Pa-s, or 6.0 Pa-s to less than 20.0 Pa-s, or 15.0 Pa-s, or 13 Pa-s.

In an embodiment, the low viscosity functionalized ethylene/α-olefin copolymer has an Mw/Mn from 1.5 to 5.0, further from 1.8 to 4.0, further from 2.0 to 3.0, and a density from 0.85 to 0.90 g/cc, further from 0.86 to 0.89 g/cc, further from 0.87 to 0.88 g/cc (1 cc = 1 cm$^3$).

In an embodiment, the low viscosity functionalized ethylene/α-olefin copolymer has a melt viscosity less than 15.0 Pa-s, or from 1.0 Pa-s to less than 15.0 Pa-s.

In an embodiment, the low viscosity functionalized ethylene/α-olefin copolymer is a maleic anhydride (MAH) grafted ethylene/α-olefin copolymer (MAH-g-ethylene/α-olefin copolymer). In a further embodiment, the low viscosity MAH-g-ethylene/α-olefin copolymer contains from 0.5 to 2.0 wt%, further from 0.7 to 1.5 wt%, further from 0.9 to 1.3 wt%, maleic anhydride. Weight percent is based on total weight of the MAH-g-ethylene/α-olefin copolymer.

In one embodiment, the low viscosity functionalized ethylene/α-olefin copolymer has a crystallinity less than 25%, or from 5% to less than 25% (as determined by DSC).

In an embodiment, the low viscosity functionalized ethylene/α-olefin copolymer has one, some, or all of the following properties: a melt viscosity from 1.0 Pa-s to less than 15.0 Pa-s, a density from 0.86 g/cc to 0.88 g/cc, and a weight average molecular weight (Mw) less than 25,000, an Mw/Mn from 1.5 to 3.0, further from 1.5 to 2.5, a melting temperature (Tm) from 68-70°C (DSC), a melt index (I2) greater than 500 g/10 minute and a crystallinity less than 25%, or from 5% to less than 25% (as determined by DSC). In a further embodiment, the low viscosity functionalized ethylene/α-olefin copolymer is a maleic anhydride (MAH) grafted ethylene/α-olefin copolymer (MAH-g- ethylene/α-olefin copolymer). In a further embodiment, the low viscosity MAH-g-ethylene/α-olefin copolymer contains from 0.5 to 2.0 wt%, further from 0.7 to 1.5 wt%, further from 0.9 to 1.3 wt%, maleic anhydride. Weight percent is based on totatl weight of the MAH-g-ethylene/α-olefin copolymer.

The copolymer component of the present composition may be the low viscosity ethylene/α-olefin copolymer, the low viscosity functionalized ethylene/α-olefin copolymer, or a combination thereof.

Non-limiting examples of suitable low viscosity functionalized ethylene/α-olefin copolymer include AFFINITY™ GA Polyolefin Elastomer available from The Dow Chemical Company, Midland, Michigan, USA.

The low viscosity functionalized ethylene/α-olefin copolymer may comprise a combination of two or more embodiments as described herein.

*3. Solvent*

The composition includes a solvent. The solvent is non-aromatic and halogen-free. The solvent has a boiling point from 100 °C to 170 °C. The solvent is select from hydrocarbon, ether, ketone, ester, and combinations thereof.

An "aromatic" compound, as used herein, is a closed-ring hydrocarbon with conjugated double bonds. The simplest aromatic compound is benzene. The term "halogen-free," as used herein, is the void or the absence of a halogen atom, such as F, Cl, Br, and I. Accordingly, the present "non-aromatic and halogen-free hydrocarbon solvent" is void of both an aromatic compound and halogen.

In an embodiment, the solvent is a non-aromatic and halogen-free hydrocarbon with a boiling point from 100 °C, or 120 °C to 140 °C, or 170 °C. The hydrocarbon may be saturated or unsaturated, and may be linear, branched, or ringed. In a further embodiment, the hydrocarbon contains from 5 to 7, or 10, or 12 carbon atoms.

Nonlimiting examples of suitable non-aromatic and halogen-free hydrocarbon solvent include ethylcyclohexane, methylcyclohexane, propylcyclopentane, isopropylcyclopentane, 1,2-dimethylcyclohexane, 1,3-dimethylcyclohexane, 1,4-dimethylcyclohexane, 1,1-dimethylcyclohexane, 1-methylcyclohexene, 4-methylcyclohexene, dipentene, and combinations thereof.

In an embodiment, the solvent is a non-aromatic and halogen-free ether with a boiling point from 100 °C, or 120 °C to 140 °C, or 170 °C. The ether may be saturated or unsaturated, and may be linear, branched, or ringed. In a further embodiment, the ether contains from 2, or 3, or 4 to 6, or, 8, or 10 carbon atoms.

Nonlimiting examples of suitable non-aromatic and halogen-free ether include 1,1-diethoxyethane, dibutyl ether, and combinations thereof, and preferably 1,1-diethoxyethane, dibutyl ether, and combinations thereof. Such solvents may be used in combination with a least one substituted or unsubstituted cyclic hydrocarbon, such as ethyl cyclohexane.

In an embodiment, the solvent is a non-aromatic and halogen-free ketone with a boiling point from 100 °C, or 120 °C to 140 °C, or 170 °C. The ketone may be saturated or unsaturated, and may be linear, branched, or ringed. In a further embodiment, the ketone contains from 2, or 4 to 5, or 6, or 7, or 8, or 9, or 10 carbon atoms.

Nonlimiting examples of suitable non-aromatic and halogen-free ketone include cyclopropyl methyl ketone, diethyl ketone, diisobutyl ketone, dipropyl ketone, ethyl butyl ketone, 4-methyl-3-penten-2-one, methyl isobutyl ketone, methyl n-propyl ketone, and combinations thereof, and preferably cyclopropyl methyl ketone, diethyl ketone, diisobutyl ketone, dipropyl ketone, ethyl butyl ketone, 4-methyl-3-penten-2-one, methyl isobutyl ketone, methyl n-propyl ketone, and combinations thereof. Such solvents may be used in combination with a least one substituted or unsubstituted cyclic hydrocarbon, such as ethyl cyclohexane.

In an embodiment, the solvent is a non-aromatic and halogen-free ester with a boiling point from 100 °C, or 120 °C to 140 °C, or 170 °C. The ester may be saturated or unsaturated, and may be linear, branched, or ringed. In a further embodiment, the ester contains from 3, or 4 to 5, or, 6, or, 7, or 8, or 9, or 10 carbon atoms.

Nonlimiting examples of suitable non-aromatic and halogen-free ester include 2-methoxy methyl lactate, N-propyl propionate, and combinations thereof.

The non-aromatic and halogen-free solvent may be any combination of the foregoing hydrocarbons, ethers, ketones, and esters.

In one embodiment, the solvent is a cyclic, $C_5$-$C_6$ hydrocarbon with substitution. In a further embodiment, the solvent is an mono-alkyl or a di-alkyl substituted cyclic, $C_5$-$C_6$ hydrocarbon. In a further embodiment, the solvent is di-alkyl substituted cyclic, $C_5$-$C_6$ hydrocarbon.

In one embodiment, the solvent is an aliphatic cyclic, $C_5$-$C_6$ hydrocarbon with substitution. In a further embodiment, the solvent is an mono-alkyl or a di-alkyl substituted aliphatic cyclic, $C_5$-$C_6$ hydrocarbon. In a further embodiment, the solvent is di-alkyl substituted aliphatic cyclic, $C_5$-$C_6$ hydrocarbon.

In one embodiment, the solvent is selected from ethylcyclohexane, cis/trans-1,3-dimethyl cyclohexane, cis-1,4-dimethyl cyclohexane,, methylcyclohexane, cis/trans-1,2-dimethyl cyclohexane, or a combination thereof.

In an embodiment, the solvent is ethylcyclohexane.

In an embodiment, the solvent is a solvent blend that comprises ethylcyclohexane. In a further embodiment, the solvent blend comprises at least one solvent selected from the following: cis/trans-1,3-dimethylcyclohexane, cis-1,4-dimethylcyclohexane, methylcyclohexane, cis/trans-1,2-dimethyl cyclohexane, cyclopropyl methyl ketone; 4-pentanone, 3-pentanone, acetal, or a combination thereof.

In an embodiment, the solvent is a solvent blend that comprises ethylcyclohexane. In a further embodiment, the solvent blend comprises at least one solvent selected from the following: cyclopropyl methyl ketone; 4-pentanone, 3-pentanone, acetal, or a combination thereof.

In an embodiment, the solvent is a solvent blend that comprises greater than, or equal to, 50 wt%, further greater than, or equal to, 70 wt%, ethylcyclohexane, based on the weight of the solvent. In a further embodiment, the solvent blend comprises at least one solvent selected from the following: cyclopropyl methyl ketone; 4-pentanone, 3-pentanone, acetal, or a combination thereof.

In an embodiment, the composition includes the low viscosity functionalized ethylene/$\alpha$-olefin copolymer dissolved in ethylcyclohexane. In a further embodiment, the low viscosity functionalized ethylene/$\alpha$-olefin copolymer is low viscosity MAH-g-ethylene/$\alpha$-olefin copolymer that is completely dissolved in the ethylcyclohexane at ambient temperate. The term "completely dissolved," as used herein, is the condition where no, or substantially no, solid phase of the low viscosity functionalized ethylene/$\alpha$-olefin copolymer is visible in the composition at ambient temperature.

*4. Relative Energy Difference*

The composition has a relative energy difference (RED) less than or equal to 1.05 $(J/cc)^{1/2}$. The RED value is based on the Hansen solubility parameter.

The concept of a numerical solubility parameter, capable of describing the solubility properties of a solvent or polymer, was first described by Hildebrand. Charles Hansen divided the Hildebrand solubility parameter into three partial solubility parameters, namely dispersion ($\delta_d$), polar ($\delta_p$), and hydrogen-bonding ($\delta_h$), each having values in $(J/cc)^{1/2}$. These three Hansen solubility parameters, or HSP, define a point, in three-dimensional solubility space, that describes the solubility properties of a solvent. HSP theory states that solvents with similar HSP should be compatible or soluble in each other. Polymers are larger molecules, which exhibit a more complex solubility behavior than pure solvents, and their solubility properties are best described as a sphere in solubility space, with the three HSP parameters, as its center coordinates, and a radius R (also in $(J/cc)^{1/2}$ that defines the size of the solubility sphere. The interaction between a solvent and a polymer is calculated as an Energy Difference (ED) using the equation 1:

$$\text{Equation 1} \qquad ED = \left(4\,(\delta_{d1} - \delta_{d2})^2 + (\delta_{p1} - \delta_{p2})^2 + (\delta_{h1} - \delta_{h2})^2\right)^{1/2},$$

where the subscripts 1 and 2 denote the HSP of the solvent and the polymer, respectively. If the ED is divided by the radius R of the sphere, one obtains the Relative Energy Difference or RED value (Equation 2).

$$\text{Equation 2} \qquad RED = \frac{\left(4\,(\delta_{d1} - \delta_{d2})^2 + (\delta_{p1} - \delta_{p2})^2 + (\delta_{h1} - \delta_{h2})^2\right)^{1/2}}{R}$$

Solvents with RED $\leq$ 1 $(J/cc)^{1/2}$ should interact strongly with the polymer by swelling it or dissolving it. In theory, the closer the RED is to zero, the stronger the interaction. In practice, this is not always observed, as the determination of solvent solubility parameters always has an error associated with it.

To characterize a polymer by its HSP and R values, it is necessary to actually measure, or at least visually rate, its solubility in a set of solvents with known solubility parameters. The solubility behavior is then fitted with a computer program that minimizes the radius of interaction, while maintaining the best agreement with the empirical solubility observations. The publicly available program SPHERE is available as part of the Hansen software (HSPiP) which is available on the internet and can be used for this purpose.

Once a polymer is characterized by its HSP and R values, a search for suitable solvents in a solvent HSP database can be conducted, using RED as the key criteria. This search can be simplified using a spreadsheet-type program, like MICROSOFT EXCEL, containing the solvent database and programmed to solve Equation 2. A second solvent modeling program allows for evaluation of other criteria, such as solvent class and boiling point. A tailored single computer program is used to perform these functions. If lacking in the database, the HSP of a given solvent can be calculated by various methods described by Hansen in his book "Hansen Solubility Parameters - A User's Handbook", 2nd Edition, CRC Press, 2007. Solvent HSP values not available in our database are calculated using the Yamamoto Molecular Break method (Y-MB) contained within the commercial HSPiP program. This program returns the HSP values for a solvent structure entered in the SMILES format (molecular structures that omit hydrogens).

In an embodiment, the composition includes a low viscosity functionalized ethylene/$\alpha$-olefin copolymer and solvent as disclosed above, and the RED value is less than or equal to 1.04 (J/cc)$^{1/2}$, or less than or equal to 1.00 (J/cc)$^{1/2}$, or less than or equal to 0.90 (J/cc)$^{1/2}$ or less than or equal to 0.80 (J/cc)$^{1/2}$.

In an embodiment, the composition has a solution viscosity, at 23°C, 5 wt% polymer (based on weight of composition), from 0.010 Pa-s to 0.040 Pa-s (Brookfield test; RPM = 30). In a further embodiment, the composition includes 5 wt% low viscosity functionalized ethylene/$\alpha$-olefin copolymer and ethylcyclohexane and the composition has a solution viscosity at 23 °C of 0.023 Pa-s.

In an embodiment, the composition has a solution viscosity, at 23°C, 10 wt% polymer (based on weight of composition), from 0.040 Pa-s to 0.080 Pa-s (Brookfield test, RPM=30). In a further embodiment, the composition includes 10 wt% low viscosity functionalized ethylene/$\alpha$-olefin copolymer and ethylcyclohexane and the composition has a solution viscosity at 23°C of 0.063 Pa-s.

*5. Additional components*

The composition may include one, some, or all of the following additional components: a non-functionalized ethylene/$\alpha$-olefin interpolymer, a chlorinated polyethylene, an ethyl vinyl acetate copolymer (28% VA), an isocyanate, and a pigment.

In an embodiment, the composition includes from 1 wt%, or 5 wt% to 10 wt%, or 15 wt% of the low viscosity ethylene/$\alpha$-olefin copolymer, or the low viscosity functionalized ethylene/$\alpha$-olefin copolymer, or a combination thereof and from 99 wt% to 90 wt%, or 85 wt% of the solvent. Weight percent is based on total weight of the composition.

The present composition may be applied as a primer composition to olefin-based polymers to promote adhesion and paintability. A pigment may be added to the primer composition to create a paint formulation for polyolefins.

The present composition may comprise two or more embodiments disclosed herein.

DEFINITIONS

Unless stated to the contrary, implicit from the context, or customary in the art, all parts and percents are based on weight, and all test methods are current as of the filing date of this disclosure.

The term "composition," as used herein, includes a mixture of materials which comprise the composition, as well as reaction products and decomposition products formed from the materials of the composition.

The terms "comprising", "including", "having" and their derivatives do not exclude the presence of any additional component or procedure. The term, "consisting essentially of" excludes any other component or procedure, except those essential to operability. The term "consisting of" excludes any component or procedure not specifically stated.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomer.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined above. A polymer may contain trace amounts of catalyst residues and/or other residues associated with its polymerization and/or isolation.

TEST METHODS

Density is measured in accordance with ASTM D-792.

*Differential Scanning Calorimetry* (DSC) is used to measure crystallinity in polyethylene (PE) based samples and polypropylene (PP) based samples. About five to eight milligrams of sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (e.g., for PE, % cryst. = ($H_f$ / 292 J/g) x 100; and for PP, % cryst. = ($H_f$ / 165 J/g) x 100).

Unless otherwise stated, melting point(s) ($T_m$) of each polymer is determined from the second heat curve obtained from DSC, as described above (peak Tm). The crystallization temperature ($T_c$) is measured from the first cooling curve (peak Tc).

*Fourier Transform Infrared Spectroscopy (FTIR) Analysis-Maleic Anhydride Content*

The concentration of maleic anhydride is determined by the ratio of peak heights of the maleic anhydride at wave number 1791 cm$^{-1}$ to the polymer reference peak, which, in case of polyethylene, is at wave number 2019 cm$^{-1}$. Maleic anhydride content is calculated by multiplying this ratio with the appropriate calibration constant. The equation used for maleic grafted polyolefins (with reference peak for polyethylene) has the following form, as shown in Equation 3.

$$MAH\,(wt\%) = A * \{[FTIR\;PeakArea@\;1791\;cm\text{-}1]/[\;FTIR\;PeakArea\;2019\;cm\text{-}1] + B*$$

$$[FTIR\;PeakArea@\;1712\;cm\text{-}1]/[\;FTIR\_PeakArea@\;2019\;cm\text{-}1]\}\quad(Equation\;3)$$

The calibration constant A can be determined using $^{13}$C NMR standards. The actual calibration constant may differ slightly depending on the instrument and polymer. The second component at wave number 1712 cm$^{-1}$ accounts for the presence of maleic acid, which is negligible for freshly grafted material. Over time however, maleic anhydride is readily converted to maleic acid in the presence of moisture. Depending on surface area, significant hydrolysis can occur in just a few days under ambient conditions. The acid has a distinct peak at wave number 1712 cm$^{-1}$. The constant B in Equation 3 is a correction for the difference in extinction coefficients between the anhydride and acid groups.

The sample preparation procedure begins by making a pressing, typically 0.05 to 0.15 millimeters in thickness, in a heated press, between two protective films, at 150-180°C for one hour. MYLAR and TEFLON are suitable protective films to protect the sample from the platens. Aluminum foil must never be used (maleic anhydride reacts with aluminum). Platens should be under pressure (~10 ton) for about five minutes. The sample is allowed to cool to room temperature, placed in an appropriate sample holder, and then scanned in the FTIR. A background scan should be run before each sample scan, or as needed. The precision of the test is good, with an inherent variability of less than ± 5%. Samples should be stored with desiccant to prevent excessive hydrolysis. Moisture content in the product has been measured as high as 0.1 weight percent. The conversion of anhydride to acid however is reversible with temperature, but may take up to one week for complete conversion. The reversion is best performed in a vacuum oven at 150°C; a good vacuum (near 30 inches Hg) is required. If the vacuum is less than adequate the sample tends to oxidize resulting in an infrared peak at approximately 1740 cm$^{-1}$, which will cause the values for the graft level to be too low. Maleic anhydride and acid are represented by peaks at about 1791 and 1712 cm$^{-1}$, respectively.

*Gel Permeation Chromatography*

The average molecular weights and molecular weight distributions for ethylene-based polymers are determined with a chromatographic system, consisting of either a Polymer Laboratories Model PL-210 or a Polymer Laboratories Model PL-220. The column and carousel compartments are operated at 140°C for ethylene-based polymers. The columns are three Polymer Laboratories 10-micron, Mixed-B columns. The solvent is 1,2,4 trichlorobenzene. The samples are prepared at a concentration of "0.1 gram of polymer' in "50 milliliters" of solvent. The solvent used to prepare the samples contains 200 ppm of butylated hydroxytoluene (BHT). Samples are prepared by agitating lightly for two hours at 160°C. The injection volume is "100 microliters," and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)):

$$M_{\text{polyethylene}} = A \text{ x } (M_{\text{polystyrene}})^B,$$

where M is the molecular weight, A has a value of 0.4315 and B is equal to 1.0. Polyethylene equivalent molecular weight calculations were performed using VISCOTEK TriSEC software Version 3.0. The molecular weights for polypropylene-based polymers can be determined using Mark-Houwink ratios according to ASTM D6474.9714-1, where, for polystyrene a = 0.702 and log K = -3.9, and for polypropylene, a = 0.725 and log K = -3.721. For polypropylene-based samples, the column and carousel compartments are operated at 160°C.

*Melt Viscosity*

Melt viscosity is measured in accordance with ASTM D 3236 (350°F), using a Brookfield Digital Viscometer (Model DV-III, version 3), and disposable aluminum sample chambers. The spindle used, in general, is a SC-31 hot-melt spindle, suitable for measuring viscosities in the range from 10 to 100,000 centipoise. The sample is poured into the chamber, which is, in turn, inserted into a Brookfield Thermosel, and locked into place. The sample chamber has a notch on the bottom that fits the bottom of the Brookfield Thermosel, to ensure that the chamber is not allowed to turn when the spindle is inserted and spinning. The sample (approximately 8-10 grams of resin) is heated to the required temperature, until the melted sample is about one inch below the top of the sample chamber. The viscometer apparatus is lowered, and the spindle submerged into the sample chamber. Lowering is continued, until the brackets on the viscometer align on the Thermosel. The viscometer is turned on, and set to operate at a shear rate which leads to a torque reading in the range of 40 to 60 percent of the total torque capacity, based on the rpm output of the viscometer. Readings are taken every minute for about 15 minutes, or until the values stabilize, at which point, a final reading is recorded.

*Melt Index*

Melt index (I2, or MI) of an ethylene-based polymer is measured in accordance with ASTM D-1238, condition 190°C/2.16 kg. For high I2 polymers (I2 greater than, or equal to, 200 g/mole, melt index is preferably calculated from Brookfield viscosity as described in U.S. Patents Nos. 6,335,410; 6,054,544; 6,723,810. I2(190°C/2.16kg) = $3.6126[10^{(\log(\eta)-6.6928)/-1.1363}]-9.31851$, where $\eta$= melt viscosity, in cP, at 350°F (176.67°C).

*Solution Viscosity*

The Brookfield viscosity of the solution composites is measured by using a Brookfield Digital Viscometer (Model DV-C) equipped with No. 3 spindle. A 150 ml sample is poured into a disposable plastic beaker. The viscometer apparatus is lowered, and the spindle submerged into the sample. Lowering is continued, until the top marked line is immersed into the sample. The viscometer is turned on with a rotor speed of 30 rpm, and the viscosity is recorded after the values become stable.

Tensile shear stress ($\sigma$, unit: megapascal (MPa)) is calculated by the following equation: $\sigma = F_m/S$, where S is the area (unit: mm$^2$) of the glued part.

Some embodiments of the present disclosure will now be described in detail in the following Examples.

EXAMPLES

*1. Materials*

Materials for inventive examples and comparative samples are provided in Table 1 below.

Table 1: Polymers used in the Experimental Adhesive (HMA) Formulations

| Polymer | Structure | I2* | Melt Viscosity (177°C) | Tm °C | Tg °C | Density (g/cc) | MAH (wt%) |
|---|---|---|---|---|---|---|---|
| 1[b] | Low viscosity MAH-g-ethylene/octene random copolymer | 660 | 13.0 | 68.0 | -58.0 | 0.870 | 1.1 |
| a) GPC results. b) MAH-g-homogeneously branched ethylene/octene copolymer. * I2--Melt index is calculated from the following equation (See US patent 6,335,410): I2(190°C/2.16kg) = $3.6126[10^{(log(\eta)-6.6928)/-1.1363}]$-9.31851, where $\eta$ = Melt viscosity, in cP, at 350°F. | | | | | | | |

*2. Polymer 1*

Polymer 1 is prepared according to the procedure described below.

Low viscosity ethylene/octene copolymer with a melt viscosity range of 6.0 to 17.0 Pa-s. Nominal 1000 MI, 0.87 g/cc.
Maleic Anhydride (MAH - DeGussa DHBP or equivalent)
Hydrobrite 380 - hydrotreated paraffinic oil to dilute peroxide as needed. (1:1 ratio of peroxide: oil).
Luperox 101 -2,5-Bis(tert-butylperoxy)-2,5-dimethylhexane (290.44 g/mol). Barrel, Gear Pump, and Die Temperature settings:

Feed barrel - cooling (49°C)
Barrel # 3: 120 °C, injection of maleic at injection port 3a and peroxide at port 4a
Barrel # 4 - 11: 235 °C
Transfer lines and Gear pump: 150°C
Die: 204°C
Screw Speed 386 rpm
MAH 16.25 lb/hr
MAH % Feed 1.55%
"1:1 Oil:POX" 3.6 lb/hr
"1:1 Oil:POX" % Feed 0.34%
Pure POX Feed 0.17%
Vac. Pressure 20 cm Hg

Polymer 1 is made on a "92 mm" co-rotating twin screw extruders (TSE). The process is summarized in the following steps: (a) the TSE is set to run at the selected barrel temperature profiles, and the screw speeds set to the desired RPMs; (b) polymer pellets are fed into the extruder hopper of the extruder by a gravimetrically, controlled auger feeder, at the desired polymer feed rate; (c) molten MAH is injected into the barrel; (d) peroxide is added via a 1:1 mineral oil solution, at a target feed rate, and injected into the barrel, downstream from the MAH; (e) kneading blocks distributed the reactive ingredients and heated the polymer melt through mechanical energy dissipation, and the reaction occurred following thermal decomposition of peroxide initiator; (f) volatile unreacted components and byproducts are removed at a vacuum port; (g) the melt is cooled in the final barrel section and fed to a gear pump; (h) the gear pump feeds a die, from which the melt travels to an underwater pelletizer. A pellet slurry cooling line of sufficient length is used to achieve residence time greater than 60 seconds, to cool pellets to less than 25°C). The pelletized product is dried and collected.

*3. RED Calculation*

Experimental Procedures

*Determination of Initial Hansen Solubility Sphere (HSS) for the Polymer 1.*

This determination requires that the solubility of the polymer (Polymer 1) be evaluated in 18 solvents having a range of polarity and hydrogen bonding properties. A list of the solvents used is given below in Table A.

Table A

| Solvents Used in Determining of the Initial HSS for Polymer 1 | |
| --- | --- |
| **Chemical Name** | **Trade Designation or Alternate Name** |
| Acetonitrile | Acetonitrile |
| Ethylene Glycol n-Butyl Ether | Butyl CELLOSOLVE™ Glycol Ether |
| Dibutyl Ether | Dibutyl ether |
| Dimethyl Formamide | Dimethyl Formamide |
| Dimethyl Sulfoxide | Dimethyl Sulfoxide |
| Methanol | Methyl Alcohol |
| 2-Butanone | Methyl Ethyl Ketone |
| 4-Methyl-2-pentanone | Methyl Isobutyl Ketone |
| n-Butyl Acetate | n-Butyl Acetate |
| n-Heptane | n-Heptane |
| 1-Propanol | n-Propyl Alcohol |
| o-Dichlorobenzene | 1,2-Dichlorobenzene |
| Tetrachloroethylene | Perchloroethylene |
| 1,2-Propanediol | Propylene Glycol |
| Tetrahydrofuran | Tetrahydrofuran |
| Toluene | Methylbenzene |
| Propylene Carbonate | Propylene Carbonate |
| Water | Water |

Samples are prepared by weighing 0.5g of the polymer beads into a 5-dram vial. The first test solvent (5.0 ml) is added into the vial with a pipette, and the vial is then capped with a polyethylene-lined lid, and labeled with the solvent loaded. This procedure is repeated with the remaining 17 test solvents. The final polymer concentration in the vial is 10% (weight/volume relationship). The vials are placed in an Eberbach shaker on the low setting at 25°C. After 24 hours, the samples are removed from the shaker, and allowed to sit for 30 minutes, before they are visually rated on a scale of 1 to 6, as per the criteria shown in Table B.

Table B

| Solubility Ratings | | |
| --- | --- | --- |
| Rating | Rating Description | Explanation of Rating |
| 1 | Completely soluble | No visible polymer particles |
| 2 | Almost soluble | Only a small amount of polymer particles left |
| 3 | Strongly swollen | Polymer beads swelled in size and or broken into smaller swollen particles |
| 4 | Swollen | Polymer beads have significantly swollen in size |
| 5 | Slightly swollen | Polymer beads show some swelling |
| 6 | Insoluble | Polymer beads unchanged |

The numerical ratings are then entered into a computer program to obtain the HSP (Hansen Solubility Parameter) and R (radius) values for the polymer, and a report is generated. The report lists the final parameters and R values calculated for the polymer. The report also lists the solvents used in the evaluation, their HSP values (as stored in the database), the ratings of the visual observations, and their RED (Relative Energy Difference) values with the polymer.

Table C below provides RED values and HSP parameters for compositions containing Polymer 1 and the 18 solvents of Table A.

Table C

RED Values and HSP Parameters for Compositions Containing Polvmer 1 Results

Run Name : Determination of HSP and R values

Resin : Polymer 1
Fitting Function : 24.75 (Spherical)

| | Initial Parameters | Final Parameters | |
|---|---|---|---|
| Hansen Dispersion Parameter: | 17.55 | 17.27 | √(J/cc) |
| Hansen Polar Parameter: | 9.00 | 6.82 | √ (J/cc) |
| Hansen Hydrogen Bonding Parameter: | 11.65 | 0.71 | √ (1/cc) |
| Solubility Sphere Radius : | 8.52 | 6.12 | √ (J/cc) |

Solvent Details :

| Solvent Name | Hansen Dispersion Parameter (√(J/cc)) | Hansen Polar Parameter (√(J/cc)) | Hansen Hydrogen Bonding Parameter (√(J/cc)) | Solubility Category | R.E.D |
|---|---|---|---|---|---|
| ACETONITRILE | 15.30 | 18.00 | 6.10 | 5 | 2.13 |
| BUTYL CELLOSOLVE GLYCOL ETHER SOLVENT | 16.00 | 7.60 | 12.30 | 6 | 1.94 |
| DIBUTYL ETHER | 15.30 | 3.40 | 3.30 | 3 | 0.95 |
| DIMETHYL FORMAMIDE | 17.40 | 13.70 | 11.30 | 6 | 2.06 |
| DIMETHYL SULFOXIDE | 18.40 | 16.40 | 10.20 | 6 | 2.23 |
| METHYL ALCOHOL | 15.10 | 12.30 | 22.30 | 6 | 3.71 |
| METHYL ETHYL KETONE | 16.00 | 9.00 | 5.10 | 5 | 0.90 |
| METHYL ISOBUTYL KETONE | 15.30 | 6.10 | 4.10 | 5 | 0.86 |
| N-BUTYL ACETATE | 15.80 | 3.70 | 6.30 | 6 | 1.15 |
| N-HEPTANE | 15.30 | 0.00 | 0.00 | 3 | 1.29 |
| N-PROPYL ALCOHOL | 16.00 | 6.80 | 17.40 | 6 | 2.76 |
| O-DICHLOROBENZENE | 19.20 | 6.30 | 3.30 | 2 | 0.76 |
| PERCHLOROETHYLENE | 18.30 | 5.70 | 0.00 | 1 | 0.40 |
| PROPYLENE | 20.00 | 18.00 | 4.10 | 6 | 2.11 |
| CARBONATE | | | | | |
| PROPYLENE GLYCOL | 16.80 | 9.40 | 23.30 | 6 | 3.72 |
| TETRAHYDROFURAN | 16.80 | 5.70 | 8.00 | 3 | 1.22 |
| TOLUENE | 18.00 | 1.40 | 2.00 | 3 | 0.94 |
| WATER (for dilute organics in water) | 19.50 | 17.80 | 17.60 | 6 | 3.37 |

*Screening Database for Potential Solvents*

Once the Polymer 1 is characterized, its HSP and R values are entered into a polymer database and an RED search is conducted against solvents in the database. The RED is fixed at a maximum value of 1.05, the solvent boiling point is allowed to range from 100 °C to 170 °C, and aromatic and halogenated solvents are excluded from the search. The following report is obtained.

Table D below provides RED values and HSP parameters for compositions with Polymer 1 and several different solvents.

Table D

| More RED Values and HSP Parameters for Compositions Containing Polymer 1 | | | | |
|---|---|---|---|---|
| Relative Energy Distance (R.E.D.) Details (Based on work area substance List) | | | | |

Resin Details :
Resin Name : Polymer 1
Hansen Dispersion Parameter : 17.27 √ (J/cc)
Hansen Polar Parameter : 6.82 √ (J/cc)
Hansen Hydrogen Bonding Parameter : 0.71 √ (J/cc)
Solubility Sphere Radius : 6.1 √ (J/cc)

Search Criteria returning 24 Solvents :
24 Solvents with a RED Value < 1.05

| Solvent Name | Relative Energy Distance | Hansen Dispersion Parameter ($\sqrt{}$(J/cc)) | Hansen Polar Parameter ($\sqrt{}$(J/cc)) | Hansen Hydrogen Bonding Parameter ($\sqrt{}$(J/cc)) | Boiling Point °C |
|---|---|---|---|---|---|
| 1,1-DIMETHYLCYCLOHEXANE | 0.92 | 16.30 | 1.80 | 2.30 | 118.0 |
| 1,2-DIMETHYLCYCLOHEXANE | 1.00 | 16.50 | 1.30 | 2.80 | 124.0 |
| 1,3-DIMETHYLCYCLOHEXANE | 0.85 | 16.80 | 3.20 | 4.30 | 121.0 |
| 1,4-DIMETHYLCYCLOHEXANE | 0.85 | 16.80 | 2.70 | 3.70 | 120.0 |
| 2-METHOXY METHYL LACTATE | 1.00 | 15.80 | 6.20 | 6.00 | 130.2 |
| 4-METHYLCYCLOHEXENE | 0.96 | 16.90 | 2.10 | 4.10 | 102.0 |
| ACETAL (1,1-DIETHOXYETHANE) | 1.04 | 15.20 | 5.40 | 5.30 | 103.6 |
| CYCLOPROPYL METHYL KETONE | 0.95 | 17.00 | 11.10 | 4.60 | 112.7 |
| DIBUTYL ETHER | 0.95 | 15.30 | 3.40 | 3.30 | 139.9 |
| DIETHYL KETONE | 0.82 | 15.80 | 7.60 | 4.70 | 102.0 |
| DIISOBUTYL KETONE | 0.86 | 16.00 | 3.70 | 4.10 | 142.1 |
| DIPENTENE (LIMONENE) | 0.94 | 16.70 | 2.30 | 4.10 | 170.0 |
| DIPROPYL KETONE | 0.86 | 15.80 | 5.70 | 4.90 | 145.0 |
| ETHYL BUTYL KETONE | 0.72 | 16.20 | 5.00 | 4.10 | 145.0 |
| ETHYLCYCLOHEXANE | 1.03 | 16.50 | 1.00 | 2.50 | 130.0 |
| ISOPROPYLCYCLOPENTANE | 0.95 | 16.40 | 1.50 | 2.10 | 126.7 |
| MESITYL OXIDE (4-METHYL-3-PENTEN-2-ONE) | 0.94 | 16.40 | 6.10 | 6.10 | 129.7 |
| METHYL ISOBUTYL KETONE | 0.86 | 15.30 | 6.10 | 4.10 | 116.0 |
| METHYL N-PROPYL KETONE | 0.79 | 16.00 | 7.60 | 4.70 | 102.3 |
| METHYLCYCLOHEXANE | 1.03 | 16.70 | 1.00 | 2.70 | 100.9 |
| N-PROPYL PROPIONATE | 0.98 | 15.70 | 5.80 | 5.70 | 122.5 |

(continued)

| More RED Values and HSP Parameters for Compositions Containing Polymer 1 | | | | | |
| Relative Energy Distance (R.E.D.) Details (Based on work area substance List) | | | | | |
| Resin Details : | | | Search Criteria returning 24 Solvents : | | |
| Resin Name : Polymer 1 | | | 24 Solvents with a RED Value < 1.05 | | |
| Hansen Dispersion Parameter : 17.27 √ (J/cc) | | | | | |
| Hansen Polar Parameter : 6.82 √ (J/cc) | | | | | |
| Hansen Hydrogen Bonding Parameter : 0.71 √ (J/cc) | | | | | |
| Solubility Sphere Radius : 6.1 √ (J/cc) | | | | | |
| Solvent Name | Relative Energy Distance | Hansen Dispersion Parameter ($\sqrt{(J/cc)}$) | Hansen Polar Parameter ($\sqrt{(J/cc)}$) | Hansen Hydrogen Bonding Parameter ($\sqrt{(J/cc)}$) | Boiling Point °C |
| PROPYLCYCLOPENTANE | 0.95 | 16.40 | 1.50 | 2.10 | 131.0 |

*4. Evaluation of Potential Solvents*

Two solvents from the list, namely ethylcyclohexane and d-limonene, are evaluated for compatibility with Polymer 1 at the 10% w/v concentration. The polymer/solvent mixtures are prepared in a 5-dram vial as described before, and gently heated with a heat gun, to get the polymer beads to melt. During this process, the vial is placed on, and off, a vortex mixer for about 15 seconds, at a time to get the contents to mix, until a clear solution was observed. The vials are left standing on a lab bench overnight. A clear homogeneous solution is still present in each vial after 24 hours, demonstrating good compatibility.

Since ethyl cyclohexane and polymer have RED of 1.03 and form a solution, it follows that other solvents in the table which have the same or lower RED should also dissolve the polymer (ex. d-limonene dissolves the polymer and the RED is 0.94).

*A. Preferred Solvents are shown in Tables E and F*

Tables E and F list a number of preferred solvents, and the solubility of Polymer 1 in each.

Table E

| Solubility of Polymer 1 at 10% by Weight | | | | |
| Solvent | After 1 Minute | After 1 Hour | After 12 Hours | After 3 Days |
| cis/trans - 1,3-dimethyl cyclohexane | Clear solution | Clear solution | Clear solution | Clear solution |
| cis-1,4-dimethyl cyclohexane | Clear solution | Clear solution | Clear solution | Clear solution |
| methylcyclohexane | Clear solution | Clear solution | Clear solution | Clear solution |
| cis/trans-1,2-dimethyl cyclohexane | Clear solution | Clear solution | Clear solution | Clear solution |

Table F

| Solubility of Polvmer 1 at 5% by Weight | | |
| Solvent | After 1 Hour | After 12 Hours |
| cis/trans-1,3-dimethyl cyclohexane | Clear solution | Clear solution |
| cis-1,4-dimethyl cyclohexane | Clear solution | Clear solution |
| methylcyclohexane | Clear solution | Clear solution |
| cis/trans-1,2-dimethyl cyclohexane | Clear solution | Clear solution |

Ethyl cyclohexane may be used with other less preferred solvents to increase the solubility of Polymer 1. For example, see Table G.

Table G

| Solubility of Polymer 1 in Solvent Blend at 5% by Weight | | |
|---|---|---|
| Solvent | After 1 hour | After 3 Days |
| 80% ethyl cyclohexane 20% cyclopropyl methyl ketone | Clear solution | Clear solution |
| 80% ethyl cyclohexane 20% 4-pentanone | Clear solution | Clear solution |
| 80% ethyl cyclohexane 20% 3-pentanone | Clear solution | Clear solution |
| 80% ethyl cyclohexane 20% acetal | Clear solution | Clear solution |

*Inventive Example 1 (IE1)*

Ethylcyclohexane (90g), and low viscosity MAH-g-ethylene/octene copolymer (10g of Polymer 1) having a melt viscosity of 13 Pa•S, a melt index of 660 g/10min, and a density of 0.87 g/ml, are mixed together in a beaker, and heated to 90 °C, with magnetic stirring for about 10 min, to totally dissolve the pellets, and form a homogeneous solution. The obtained solution remains in liquid form after being cooled to room temperature. The solution remains stable for 30 days (or longer) according to the lab test data and visible inspection.

*Comparative Sample 1 (CS1)*

Dimethyl formamide (90g), and low viscosity MAH-g-ethylene/octene copolymer (10g of Polymer 1) having a melt viscosity of 13 Pa•S, a melt index of 660 g/10min, and a density of 0.87 g/ml, are mixed together in a beaker, and heated to 90 °C, with magnetic stirring for 30 min. The pellets melted and stick together. The pellets cannot be dissolved to obtain a homogeneous solution, which is undesired.

*Comparative Sample 2 (CS2)*

Ethyl cyclohexane (90g), and ethylene/octene copolymer grafted maleic anhydride (10g) having a melt index of 0.3 g/10 min, and a density of 0.87 g/ml, are mixed together in a beaker, and heated to 90 °C, with magnetic stirring for 30 min. The ethylene/octene copolymer grafted maleic anhydride of CS2 is not a low viscosity functionalized ethylene/$\alpha$-olefin copolymer as defined in the present disclosure. Rather, the ethylene/octene copolymer grafted maleic anhydride of CS2 has a melt viscosity of 1620 Pa-s. The pellets melted and stick to the bottom of the beaker. The pellets cannot be dissolved to obtain a homogeneous solution, which is undesired.

The above mentioned IE1 is used to improve the bonding strength of two rectangular substrates, each substrate formed from a polypropylene/OBC blend. Each substrate has a width of 1 cm. Each substrate is first cleaned manually with acetone. Then the substrates are left in a fume hood for several minutes to remove the acetone. The primer composition prepared in IE1 is heated to 70°C, before applying to the substrate surfaces as a thin film. The primer composition is manually brushed onto the substrate surfaces. After the primer dries, a two-part adhesive (LOCTITE 3038) is applied onto the primed surface (denoted as "Primer" in Figure 1). Next, the two rectangular substrates are pressed and glued together with an overlapped area about 1~2 cm$^2$.

In Figure 1, Control is LOCTITE 3038 (glue only).

*Peel Strength Testing*

The glued specimen is conditioned at room temperature, for at least 24 hours, before testing the peel strength. The peel strength is tested on an INSTRON 5566 machine. The maximum tensile force ($F_m$, unit: N) is recorded, and the tensile shear stress ($\sigma$, unit: MPa) is calculated by the following equation: $\sigma = F_m/S$, where S is the area (unit: mm$^2$) of the glued part. As seen in Figure 1, the tensile shear stress for the Primer treated surfaces is greater than the tensile shear stress for surfaces treated with glue only. Figure 1 demonstrates that the bonding strength, is significantly improved after the application of IE1 primer composition to the polypropylene/OBC substrates.

**Claims**

1. A composition comprising:

 a low viscosity ethylene/α-olefin copolymer or a low viscosity functionalized ethylene/α-olefin copolymer, each copolymer having a melt viscosity less than or equal to 20.0 Pa•s (177°C); and
 a non-aromatic and halogen-free solvent with a boiling point from 100°C to 170°C, and wherein the composition has a Relative Energy Difference (RED) less than or equal to 1.05 $(J/cc)^{1/2}$, based on the Hansen solubility parameter.

2. The composition of claim 1 wherein the low viscosity ethylene/α-olefin copolymer or the low viscosity functionalized ethylene/α-olefin copolymer, each has the following properties:

 a) an Mw/Mn from 1.5 to 5.0, and
 b) a density from 0.855 to 0.900 g/cc.

3. The composition of any of claims 1-2, wherein the low viscosity ethylene/α-olefin copolymer or the low viscosity functionalized ethylene/α-olefin copolymer, each has a melt viscosity from 1.0 Pa-s to less than 15.0 Pa-s.

4. The composition of any of claims 1-3, comprising a low viscosity ethylene/α-olefin copolymer having a melt viscosity less than or equal to 10.0 Pa•s (177°C);

 a) an Mw/Mn from 1.5 to 2.5; and
 b) a density from 0.86 to 0.88.

5. The composition of any of claims 1-3 wherein the composition comprises a low viscosity functionalized ethylene/α-olefin copolymer having a melt viscosity less than 15.0 Pa-s.

6. The composition of any of claims 1-5 wherein the solvent is selected from the group containing ethylcyclohexane, methylcyclohexane, propylcyclopentane, isopropylcyclopentane, 1,2-dimethylcyclohexane, 1,3-dimethylcyclohexane, 1,4-dimethylcyclohexane, 1,1-dimethylcyclohexane, 1-methylcyclohexene, 4-methylcyclohexene, dipentene, and combinations thereof.

7. The composition of claim 6 wherein the solvent is ethylcyclohexane.

8. The composition of claim 1 comprising a low viscosity functionalized ethylene/α-olefin copolymer that is a low viscosity maleic anhydride grafted ethylene/α-olefin copolymer dissolved in ethylcyclohexane.

9. The composition of claim 8, wherein the low viscosity maleic anhydride grafted ethylene/α-olefin copolymer is completely dissolved in the ethylcyclohexane, at ambient temperature.

10. The composition of any of the previous claims, further comprising a pigment.

**Patentansprüche**

1. Eine Zusammensetzung, die Folgendes beinhaltet:

 ein Ethylen-α-Olefin-Copolymer niedriger Viskosität oder ein funktionalisiertes Ethylen-α-Olefin-Copolymer niedriger Viskosität, wobei jedes Copolymer eine Schmelzviskosität von weniger als oder gleich 20,0 Pa•s (177 °C) aufweist; und
 ein nicht aromatisches und halogenfreies Lösungsmittel mit einem Siedepunkt von 100 °C bis 170 °C, und wobei die Zusammensetzung eine relative Energiedifferenz (RED) von weniger als oder gleich 1,05 $(J/cm^3)^{1/2}$, auf der Basis des Hansen-Löslichkeitsparameters, aufweist.

2. Zusammensetzung gemäß Anspruch 1, wobei das Ethylen-α-Olefin-Copolymer niedriger Viskosität oder das funktionalisierte Ethylen-α-Olefin-Copolymer niedriger Viskosität jeweils die folgenden Eigenschaften aufweist:

(a) ein Mw/Mn von 1,5 bis 5,0 und
(b) eine Dichte von 0,855 bis 0,900 g/cm$^3$.

3. Zusammensetzung gemäß einem der Ansprüche 1-2, wobei das Ethylen-$\alpha$-Olefin-Copolymer niedriger Viskosität oder das funktionalisierte Ethylen-$\alpha$-Olefin-Copolymer niedriger Viskosität jeweils eine Schmelzviskosität von 1,0 Pa-s bis weniger als 15,0 Pa-s aufweist.

4. Zusammensetzung gemäß einem der Ansprüche 1-3, beinhaltend ein Ethylen-$\alpha$-Olefin-Copolymer niedriger Viskosität mit einer Schmelzviskosität von weniger als oder gleich 10,0 Pa•s (177 °C);

(a) einem Mw/Mn von 1,5 bis 2,5 und
(b) einer Dichte von 0,86 bis 0,88.

5. Zusammensetzung gemäß einem der Ansprüche 1-3, wobei die Zusammensetzung ein funktionalisiertes Ethylen-$\alpha$-Olefin-Copolymer niedriger Viskosität mit einer Schmelzviskosität von weniger als 15,0 Pa-s aufweist;

6. Zusammensetzung gemäß einem der Ansprüche 1-5, wobei das Lösungsmittel ausgewählt ist aus der Gruppe, die Ethylcyclohexan, Methylcyclohexan, Propylcyclopentan, Isopropylcyclopentan, 1,2-Dimethylcyclohexan, 1,3-Dimethylcyclohexan, 1,4-Dimethylcyclohexan, 1,1-Dimethylcyclohexan, 1-Methylcyclohexen, 4-Methylcyclohexen, Dipenten und Kombinationen davon enthält.

7. Zusammensetzung gemäß Anspruch 6, wobei das Lösungsmittel Ethylcyclohexan ist.

8. Zusammensetzung gemäß Anspruch 1, die ein funktionalisiertes Ethylen-$\alpha$-Olefin-Copolymer niedriger Viskosität beinhaltet, das ein in Ethylcyclohexan aufgelöstes, mit Maleinsäureanhydrid gepfropftes Ethylen-$\alpha$-Olefin-Copolymer niedriger Viskosität ist.

9. Zusammensetzung gemäß Anspruch 8, wobei das mit Maleinsäureanhydrid gepfropfte Ethylen-$\alpha$-Olefin-Copolymer niedriger Viskosität bei Umgebungstemperatur vollständig in dem Ethylcyclohexan aufgelöst ist.

10. Zusammensetzung gemäß einem der vorhergehenden Ansprüche, die ferner ein Pigment beinhaltet.

## Revendications

1. Une composition comprenant :

un copolymère éthylène/$\alpha$-oléfine de basse viscosité ou un copolymère éthylène/$\alpha$-oléfine fonctionnalisé de basse viscosité, chaque copolymère ayant une viscosité à l'état fondu inférieure ou égale à 20,0 Pa.s (177 °C) ; et un solvant non-aromatique et dépourvu d'halogène avec un point d'ébullition allant de 100 °C à 170 °C, et la composition ayant une différence d'énergie relative (DER) inférieure ou égale à 1,05 (J/cm$^3$)$^{1/2}$, sur la base du paramètre de solubilité Hansen.

2. La composition de la revendication 1 dans laquelle le copolymère éthylène/$\alpha$-oléfine de basse viscosité ou le copolymère éthylène/$\alpha$-oléfine fonctionnalisé de basse viscosité ont chacun les propriétés suivantes :

a) un Mw/Mn allant de 1,5 à 5,0, et
b) une masse volumique allant de 0,855 à 0,900 g/cm$^3$.

3. La composition de n'importe lesquelles des revendications 1 à 2, dans laquelle le copolymère éthylène/$\alpha$-oléfine de basse viscosité ou le copolymère éthylène/$\alpha$-oléfine fonctionnalisé de basse viscosité ont chacun une viscosité à l'état fondu allant de 1,0 Pa-s à moins de 15,0 Pa-s.

4. La composition de n'importe lesquelles des revendications 1 à 3, comprenant un copolymère éthylène/$\alpha$-oléfine de basse viscosité ayant une viscosité à l'état fondu inférieure ou égale à 10,0 Pa.s (177 °C) ;

a) un Mw/Mn allant de 1,5 à 2,5 ; et
b) une masse volumique allant de 0,86 à 0,88.

**5.** La composition de n'importe lesquelles des revendications 1 à 3, la composition comprenant un copolymère éthylène/α-oléfine fonctionnalisé de basse viscosité ayant une viscosité à l'état fondu inférieure à 15,0 Pa-s.

**6.** La composition de n'importe lesquelles des revendications 1 à 5, dans laquelle le solvant est sélectionné dans le groupe contenant de l'éthylcyclohexane, du méthylcyclohexane, du propylcyclopentane, de l'isopropylcyclopentane, de l'1,2-diméthylcyclohexane, de l'1,3-diméthylcyclohexane, de l'1,4-diméthylcyclohexane, de l'1,1-diméthylcyclohexane, de l'1-méthylcyclohexène, du 4-méthylcyclohexène, du dipentène, et des combinaisons de ceux-ci.

**7.** La composition de la revendication 6 dans laquelle le solvant est de l'éthylcyclohexane.

**8.** La composition de la revendication 1 comprenant un copolymère éthylène/α-oléfine fonctionnalisé de basse viscosité qui est un copolymère éthylène/α-oléfine greffé anhydride maléique de basse viscosité dissous dans de l'éthylcyclohexane.

**9.** La composition de la revendication 8, dans laquelle le copolymère éthylène/α-oléfine greffé anhydride maléique de basse viscosité est complètement dissous dans de l'éthylcyclohexane, à température ambiante.

**10.** La composition de n'importe lesquelles des revendications précédentes, comprenant en outre un pigment.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 12081401 W
- US 5272236 A
- US 5278272 A
- US 6054544 A
- US 6335410 B
- US 6723810 B
- US 4076698 A, Anderson

**Non-patent literature cited in the description**

- **HANSEN.** Hansen Solubility Parameters - A User's Handbook. CRC Press, 2007
- **WILLIAMS ; WARD.** *J. Polym. Sci.,* 1968, vol. 6, 621